# EUROPÄISCHE PATENTANMELDUNG

(11) **EP 4 807 715 A1**
(43) Veröffentlichungstag der Anmeldung: **16.09.2026**
(21) Anmeldenummer: 26163172.5
(22) Anmeldetag: 09.03.2026
(51) Int. Cl.: G09B 17/00, G09B 17/04, G10L 13/00, G10L 13/033

(54) **VERFAHREN UND SYSTEM ZUR AUTOMATISIERTEN SPRACHAUSGABE MIT PERSONALISIERTER STIMMKLON-TECHNOLOGIE UND SYNCHRONER MARKIERUNG**

(30) Priorität: 10.03.2025 DE 102025109054
(71) Anmelder: Clelo - Gemeinnützige Gesellschaft zur digitalen Le-se- und Sprachförderung gUG (haftungsbeschränkt), 93055 Regensburg (DE)
(72) Erfinder: Endres, Herbert, 93055 Regensburg (DE)
(74) Vertreter: Hannke Bittner & Partner mbB Regensburg

(57) **Zusammenfassung**

Die vorliegende Erfindung betrifft ein Verfahren und System zur automatisierten Sprachausgabe mit personalisierter Stimmklon-Technologie und synchroner Markierung, umfassend die Erzeugung einer synthetisierten Stimme mittels Stimmklon-Technologie basierend auf einer initialen Sprachaufnahme, die synchrone Markierung der gelesenen Textpassagen auf einem Anzeigegerät in Abhängigkeit von der Sprachausgabe, die Steuerung der Vorlesegeschwindigkeit, die Integration eines Echtzeit-Feedbacksystems zur Analyse der Lesegenauigkeit sowie die Nutzung eines Kl-basierten Modells zur Erkennung und Optimierung der individuellen Lesegeschwindigkeit.

## Beschreibung

Die vorliegende Erfindung betrifft ein Verfahren und System zur automatisierten Sprachausgabe mit personalisierter Stimmklon-Technologie und synchroner Markierung gemäß dem Oberbegriff des Patentanspruchs 1.

Die vorliegende Erfindung betrifft ein Verfahren und ein System zur automatisierten Sprachausgabe unter Verwendung einer personalisierten Stimmklon-Technologie. Insbesondere ermöglicht die Erfindung die synchrone Markierung von Textpassagen in Abhängigkeit von der Sprachausgabe und die Anpassung der Wiedergabegeschwindigkeit zur individuellen Steuerung des Ausgabeprozesses. Weiterhin umfasst die Erfindung die Integration adaptiver Lernmechanismen sowie interaktiver Feedback-Systeme zur Verbesserung der Lese- und Sprachkompetenz des Nutzers. Zusätzlich können erweiterte Funktionen wie akustische Signale zur Verbesserung der Lesegeschwindigkeit und eine multimodale Darstellung des Textes mit grafischer Unterstützung integriert werden. Zudem kann die Erfindung eine Klbasierte Steuerung enthalten, die die individuellen Lesegewohnheiten und/oder Lesegenauigkeit des Nutzers analysiert und adaptive Anpassungen der Vorleseparameter vornimmt.

Systeme zur Sprachausgabe setzen häufig auf standardisierte synthetische Stimmen, die für den Nutzer wenig individuell sind. Bekannte Text-to-Speech-Systeme ermöglichen zwar eine Vorlesefunktion, jedoch fehlt es an einer nahtlosen Integration einer personalisierten Vorlesestimme. Die Markierung des Textes erfolgt zudem oft unsynchron oder mit statischer Geschwindigkeit, was die Anpassungsfähigkeit einschränkt.

Die Möglichkeit, eine synthetisierte Stimme basierend auf einer individuellen Stimmaufnahme zu generieren und diese mit einer dynamischen, synchronen Textmarkierung zu kombinieren, ist in bestehenden Systemen nicht bekannt. Ebenso fehlt es an einer flexiblen Geschwindigkeitssteuerung, die eine adaptive Anpassung an Nutzerpräferenzen oder externe Bedingungen ermöglicht.

Moderne Entwicklungen in der Sprachsynthese-Technologie nutzen maschinelles Lernen und neuronale Netze zur Analyse und Verarbeitung von Stimmen. Besonders fortschrittliche Systeme erlauben die Erzeugung synthetischer Stimmen mit nur wenigen Sekunden an Audiomaterial. Derartige Verfahren sind jedoch bislang nicht umfassend in interaktive Lese- und Lernanwendungen integriert. Neben personalisierten Stimmen können Systeme zur Verbesserung der Benutzerfreundlichkeit auch adaptive Stimmmodulation einsetzen, um je nach Textinhalt unterschiedliche Betonungen, Lautstärken und Emotionen zu erzeugen. Künstliche Intelligenz kann zudem genutzt werden, um automatisch Lesemuster zu erkennen und die Vorlesegeschwindigkeit in Abhängigkeit von der Nutzerleistung anzupassen.

Erfindungsgemäß umfasst das Verfahren und System zur automatisierten Sprachausgabe mit personalisierter Stimmklon-Technologie und synchroner Markierung die Erzeugung einer synthetisierten Stimme mittels Stimmklon-Technologie basierend auf einer initialen Sprachaufnahme, die synchrone Markierung der gelesenen Textpassagen auf einem Anzeigegerät in Abhängigkeit von der Sprachausgabe, die Steuerung der Vorlesegeschwindigkeit, die Integration eines Echtzeit-Feedbacksystems zur Analyse der Lesegenauigkeit sowie die Nutzung eines Kl-basierten Modells zur Erkennung und Optimierung der individuellen Lesegeschwindigkeit.

Gemäß zumindest einer Ausführungsform wird ein selbstlernendes System mit Kernel-Technologie eingesetzt, um die Sprachausgabe kontinuierlich zu optimieren und auf Basis vorheriger Nutzereingaben dynamisch anzupassen.

Gemäß zumindest einer Ausführungsform wird die Vorlesegeschwindigkeit automatisch an das Lesetempo des Nutzers angepasst.

Gemäß zumindest einer Ausführungsform wird die Sprachausgabe mit Echtzeit-Sprachanalyse zur Erkennung von Sprachmodulationen und Betonungen kombiniert.

Gemäß zumindest einer Ausführungsform speichert das System individuelle Leseprofile und verwendet dies zur Anpassung der Sprachausgabe.

Gemäß zumindest einer Ausführungsform erfolgt die Textmarkierung in Form von Sprechsilbe-für-Sprechsilbe, Wort-für-Wort- oder satzweisen Markierungen.

Gemäß zumindest einer Ausführungsform ist eine Cloud-Speicherung der personalisierten Sprachdaten zur plattformübergreifenden Nutzung vorgesehen.

Gemäß zumindest einer Ausführungsform integriert das System eine mehrsprachige Unterstützung für simultane Übersetzungen.

Gemäß zumindest einer Ausführungsform erfolgt die Steuerung der Sprachausgabe über eine multimodale Schnittstelle mit Spracheingabe, Touchscreen oder Gestenerkennung.

Gemäß zumindest einer Ausführungsform können neuronale Netze für Stimmklone verwendet werden, um personalisierte Stimmen mit hoher Natürlichkeit und variabler Prosodie zu erzeugen. Dabei können Zero-Shot-Voice-Cloning-Technologien genutzt werden, um mit nur wenigen Sekunden an Sprachmaterial eine naturgetreue Vorlesestimme zu generieren.

Gemäß zumindest einer weiteren Ausführungsform kann das System Sprachsynthese-Algorithmen auf Basis von Diffusionsmodellen oder autoregressiven Decodern einsetzen, um eine hochrealistische Sprachausgabe zu ermöglichen.

Gemäß zumindest einer weiteren Ausführungsform können adaptive Lernmechanismen integriert sein, die auf Basis der Nutzerdaten individuelle Leseprofile erstellen und die Vorlesegeschwindigkeit sowie Betonung automatisch an den Fortschritt anpassen. Dies kann durch maschinelles Lernen erfolgen, welches individuelle Muster im Leseverhalten erkennt und daraus eine optimierte Ausgabe ableitet.

Gemäß zumindest einer weiteren Ausführungsform kann das System eine Echtzeit-Ausspracheanalyse beinhalten, die Fehler erkennt und den Nutzer gezielt korrigiert, vergleichbar mit einem interaktiven Sprachcoach.

Gemäß zumindest einer weiteren Ausführungsform kann das System mit Augmented-Reality-Technologie kombiniert werden, um gedruckte Bücher oder Texte durch eine AR-Brille zu erfassen und die synchronisierte Sprachausgabe direkt auf das physische Medium zu projizieren.

Gemäß zumindest einer weiteren Ausführungsform kann eine Integration in VR-Umgebungen erfolgen, bei der virtuelle Avatare mit geklonter Stimme interagieren, um ein immersives Lernerlebnis zu schaffen.

Gemäß zumindest einer weiteren Ausführungsform kann das System eine mehrsprachige Sprachsynthese mit sofortiger Übersetzung kombinieren, sodass Texte simultan in einer anderen Sprache mit der personalisierten Stimme vorgelesen werden können.

Gemäß zumindest einer weiteren Ausführungsform kann ein selbstlernendes System mit Kernel-Technologie integriert sein, das kontinuierlich aus Nutzereingaben lernt und individuelle Anpassungen der Sprachsynthese in Echtzeit vornimmt. Insbesondere kann das System durch adaptive Algorithmen verschiedene Stimmmodulationen basierend auf Kontext, Inhalt und Benutzerinteraktion dynamisch anpassen.

Um das Text- und Sprachverständnis zu schulen, kann eine Lexikonfunktion integriert sein, die es ermöglicht, dass Nutzer auf das Wort, das sie nicht verstehen klicken und dann eine Audiodatei, Erklärung oder ein Bild/Illustration zu dem jeweiligen Wort sehen.

Im Folgenden wird die hier beschriebene Erfindung anhand von vier Figuren und der dazugehörigen Beschreibung näher dargestellt.

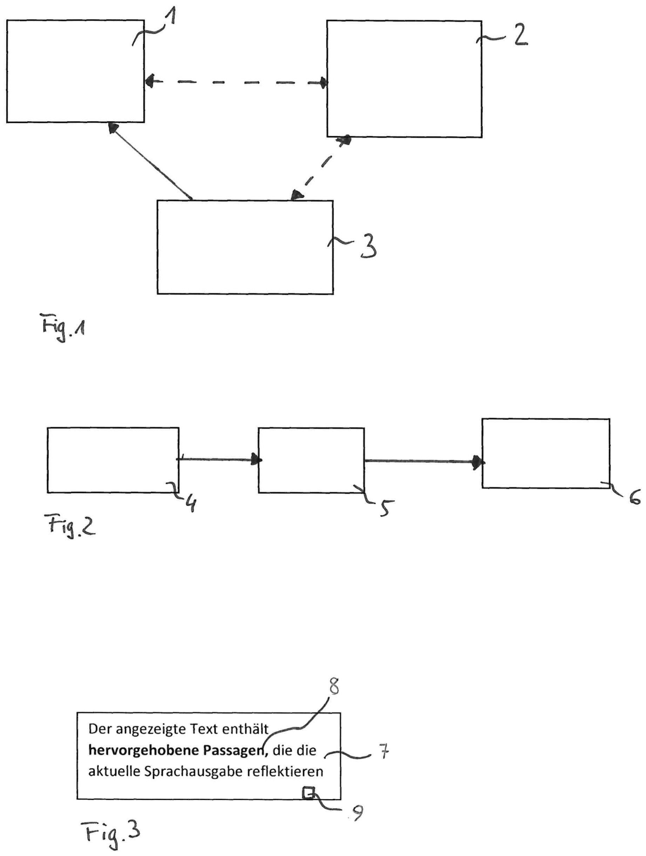

Die Figur 1 zeigt eine schematische Darstellung eines Systems zur synchronisierten Sprachausgabe mit textlicher Markierung. Das System umfasst ein Anzeige-Gerät 1, ein Audio-Ausgabesystem 2 sowie eine Verarbeitungseinheit 3. Die Verarbeitungseinheit 3 ist so konfiguriert, dass sie die Sprachausgabe eines Textes 7 mit einer entsprechenden Markierung auf dem Anzeige-Gerät 1 synchronisiert. Dies ermöglicht es dem Benutzer, den vorgelesenen Text 7 simultan visuell nachzuverfolgen. Die Verarbeitungseinheit 3 kann dabei verschiedene Synchronisationsmodi unterstützen, um individuelle Präferenzen des Nutzers zu berücksichtigen.

Die Figur 2 stellt den Ablauf zur Generierung einer personalisierten synthetisierten Stimme dar. Der Prozess beginnt mit einer initialen Sprachaufnahme 4, bei der der Benutzer eine vordefinierte Menge an Texten 7 einspricht. Anschließend erfolgt eine Verarbeitung 5, bei der die aufgenommenen Sprachdaten analysiert insbesondere und in ein für das maschinelle Lernen geeignetes Modell überführt werden. In einem Klonierungsschritt 6 wird daraus eine synthetisierte Stimme erstellt, die den individuellen Charakteristiken der ursprünglichen Stimme entspricht. Abschließend kann die personalisierte Stimme in das System integriert und für die Sprachausgabe verwendet werden.

Die Figur 3 zeigt eine beispielhafte Benutzeroberfläche eines Systems zur synchronisierten Sprachausgabe. Der angezeigte Text 7 enthält hervorgehobene Passagen 9, die die aktuelle Sprachausgabe reflektieren. Zusätzlich sind Bedienelemente 10 zur Steuerung der Vorlesegeschwindigkeit und zur Anpassung der Synchronisation vorhanden. Die Benutzeroberfläche kann weiterhin Optionen für die Anpassung von Stimmeigenschaften oder die Auswahl einer personalisierten synthetisierten Stimme beinhalten.

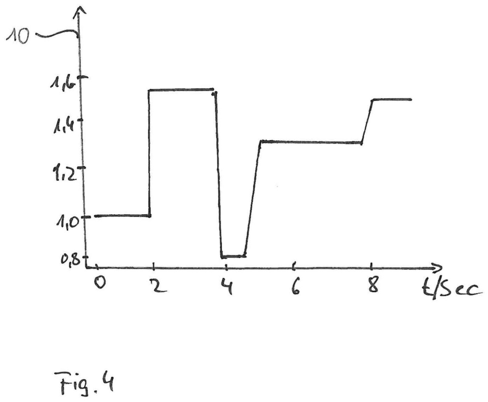

Die Figur 4 zeigt ein Diagramm zur automatischen Anpassung der Vorlesegeschwindigkeit in Abhängigkeit von Benutzerinteraktionen. Das System erfasst kontinuierlich Eingaben des Benutzers, wie beispielsweise das manuelle Anpassen der Geschwindigkeit oder das Vor- und Zurückspringen im Text 7. Basierend auf diesen Interaktionen erfolgt eine dynamische Modifikation der Wiedergabegeschwindigkeit 10 durch die Verarbeitungseinheit 3. Hierbei kann das System lernbasierte Algorithmen verwenden, um sich an die bevorzugte Lesegeschwindigkeit des Benutzers anzupassen und so ein optimales Hörerlebnis zu gewährleisten.

### Bezugszeichenliste

- 1: Anzeige-Gerät
- 2: Audio-Ausgabesystem
- 3: Verarbeitungseinheit
- 4: Sprachaufnahme
- 5: Verarbeitung
- 6: Klonierungsschritt
- 7: Text
- 8: Passagen
- 9: Bedienelemente
- 10: Wiedergabegeschwindigkeit

## Patentansprüche

1. Verfahren und System zur automatisierten Sprachausgabe mit personalisierter Stimmklon-Technologie und synchroner Markierung, umfassend
- die Erzeugung einer synthetisierten Stimme mittels Stimmklon-Technologie basierend auf einer initialen Sprachaufnahme (4);
- die synchrone Markierung der gelesenen Textpassagen (8) auf einem Anzeigegerät (1) in Abhängigkeit von der Sprachausgabe;
- die Steuerung der Vorlesegeschwindigkeit,
- die Integration eines Echtzeit-Feedbacksystems zur Analyse der Lesegenauigkeit,
- die Nutzung eines Kl-basierten Modells zur Erkennung und Optimierung der individuellen Lesegeschwindigkeit und/oder Lesegenauigkeit.

2. Verfahren nach Anspruch 1,
**dadurch gekennzeichnet, dass**
ein selbstlernendes System mit Kernel-Technologie eingesetzt wird, um die Sprachausgabe kontinuierlich zu optimieren und auf Basis vorheriger Nutzereingaben dynamisch anzupassen.

3. Verfahren nach einem der vorhergehenden Ansprüche,
**dadurch gekennzeichnet, dass**
die Vorlesegeschwindigkeit automatisch an das Lesetempo des Nutzers angepasst wird.

4. Verfahren nach einem der vorhergehenden Ansprüche,
**dadurch gekennzeichnet, dass**
die Sprachausgabe mit Echtzeit-Sprachanalyse zur Erkennung von Sprachmodulationen und Betonungen kombiniert wird.

5. Verfahren nach einem der vorhergehenden Ansprüche,
**dadurch gekennzeichnet, dass**
das System individuelle Leseprofile speichert und zur Anpassung der Sprachausgabe verwendet.

6. Verfahren nach einem der vorhergehenden Ansprüche,
**dadurch gekennzeichnet, dass**
die Textmarkierung in Form von Sprechsilbe-für-Sprechsilbe, Wort-für-Wort- oder satzweisen Markierungen erfolgt.

7. Verfahren nach einem der vorhergehenden Ansprüche,
**dadurch gekennzeichnet, dass**
eine Cloud-Speicherung der personalisierten Sprachdaten zur plattformübergreifenden Nutzung vorgesehen ist.

8. Verfahren nach einem der vorhergehenden Ansprüche,
**dadurch gekennzeichnet, dass**
das System eine mehrsprachige Unterstützung für simultane Übersetzungen integriert.

9. Verfahren nach einem der vorhergehenden Ansprüche,
**dadurch gekennzeichnet, dass**
die Steuerung der Sprachausgabe über eine multimodale Schnittstelle mit Spracheingabe, Touchscreen oder Gestenerkennung erfolgt.
